# EUROPEAN PATENT SPECIFICATION

(11) **EP 4 010 959 B1**
(45) Date of publication and mention of the grant of the patent: **19.11.2025**
(21) Application number: 20760913.2
(22) Date of filing: 04.08.2020
(51) Int. Cl.: H02K 15/022, B62J 43/13, B62J 43/20, B62M 6/65, H02K 15/12, H02K 1/14, H02K 3/52, H02K 1/18, H02K 11/215, H02K 11/00, B62M 6/90

(54) **MANUFACTURING PROCESS OF STATORS FOR ELECTRIC MOTORS AND/OR GENERATORS**
VERFAHREN ZUR HERSTELLUNG VON STATOREN FÜR ELEKTROMOTOREN UND/ODER GENERATOREN
PROCÉDÉ DE FABRICATION DE STATORS POUR MOTEURS ET/OU GÉNÉRATEURS ÉLECTRIQUES

(30) Priority: 08.08.2019 IT 201900014442
(43) Date of publication of application: 15.06.2022
(73) Proprietor: C.R.D. Centro Ricerche Ducati Trento S.r.l., 38068 Rovereto (TN) (IT)
(72) Inventor: ZANFEI, Adriano, 38068 Rovereto (TN) (IT)
(74) Representative: Brunacci, Marco
(86) International application number: PCT/IB2020/057353
(87) International publication number: WO 2021/024175

(56) References cited:
- EP-A1- 3 035 491
- US-A1- 2003 146 671
- US-A1- 2006 091 758
- US-A1- 2013 249 327
- US-A1- 2015 381 022
- US-A1- 2019 193 811

## Description

### Technical Field

The present invention relates to a manufacturing process of stators for electric motors and/or generators.

### Background Art

It is well known that electric motors are rotating electrical machines that transform electricity, applied to power terminals, into mechanical energy, in this case in the form of a rotating motor shaft.

On the contrary, electrical generators are devices intended to produce electricity from a different source of energy.

Both these types of electrical machine base their operating principle on the electromagnetic forces that interact between a system of currents and a magnetic field induced between a stator and a rotor.

There are different types of stators.

A first type consists of permanent magnet stators, often used in DC motors, wherein the stators are composed of magnets and usually have a smooth surface. A second type consists of wound stators, generally used in AC motors, universal motors, brushless motors and stepper motors.

**In** this second type, the stators are usually composed of laminations made of ferromagnetic material (e.g. a steel-silicon alloy), of thickness varying a few tenths of a millimeter and electrically insulated from each other.

The laminations are obtained by blanking, photo-engraving or laser cutting, so as to have a circular ring shape with a plurality of protuberances.

When the laminations are packed and assembled together, they form a ferromagnetic stator body with an annular shape, with a thickness substantially equal to the sum of the thicknesses of the individual laminations and wherein the protuberances of the laminations form a plurality of polar protrusions around which the electrical wire windings are wound.

By powering the electrical wire windings with an electrical current, a magnetic field is produced inside the polar protrusions according to the well-known laws of electromagnetism.

For this purpose, the windings must be electrically insulated from the laminations and, therefore, sheets of insulating paper, special paints or other separating materials are usually placed between the windings and the polar protrusions.

The wound stators of known type do however have some drawbacks, in particular the fact that they have very high manufacturing costs.

**In** particular, it is noted that, in order to produce such stators, it is necessary to carry out several operations, which are not easy to carry out, comprising the above mentioned phase of electrical insulation of the windings from the laminations.

The application of sheets of insulating paper, special paints or other separating materials around the polar protrusions is often particularly difficult and complicates the entire production process.

**In** addition, the blanking, photo-engraving or laser cutting operations of the laminations with annular shape produce considerable debris and waste of material, especially when the diameter of the stator (and consequently of the circular ring of the laminations) is very large.

**In** this respect, it should be noted that the manufacturing costs of the stators significantly affect the overall cost of the electrical machines on which they are mounted and inevitably increase the retail price, with the risk of making the products less attractive to customers.

It should also not be forgotten that, depending on the type of destination and application, known stators must be combined with other electronic devices and components, such as magnetic sensors and electrical batteries, which are necessary for the correct operation of the electrical machine but cannot always be easily combined with stators of known type.

In the three-phase electric motors with permanent magnets, for example, a certain number of magnetic sensors must be mounted on the stators in order to detect the position of the rotor with respect to the stator and which, inconveniently, must be fastened to the stator at predefined positions, which takes time for the assembly.

Special methods and systems for manufacturing stators are disclosed in the patent documents US2013/249327A1, US2015/381022A1, US2003/146671A1, EP3035491A1, US2006/091758A1 and US2019/193811A1.

### 5 Description of the Invention

The main aim of the present invention is to devise a manufacturing process of stators for electric motors and/or generators that allows for the production of stators in a practical, easy and functional manner and allows for a significant reduction in the production costs.

As part of this technical aim, a further object of the present invention is to devise a manufacturing process of stators for electric motors and/or generators that allows stators to be easily combined with other electronic devices and components.

Another object of the present invention is to devise a manufacturing process of stators for electric motors and/or generators that allows overcoming the aforementioned drawbacks of the prior art within a simple, rational, easy and effective-to-use solution.

The objects set out above are achieved by the present manufacturing process of stators for electric motors and/or generators having the characteristics of claim 1.

### Brief Description of the Drawings

Other characteristics and advantages of the present invention will be more evident from the description of a preferred, but not exclusive, embodiment of a manufacturing process of stators for electric motors and/or generators, illustrated by way of an indicative, yet non-limiting example, in the attached tables of drawings in which:

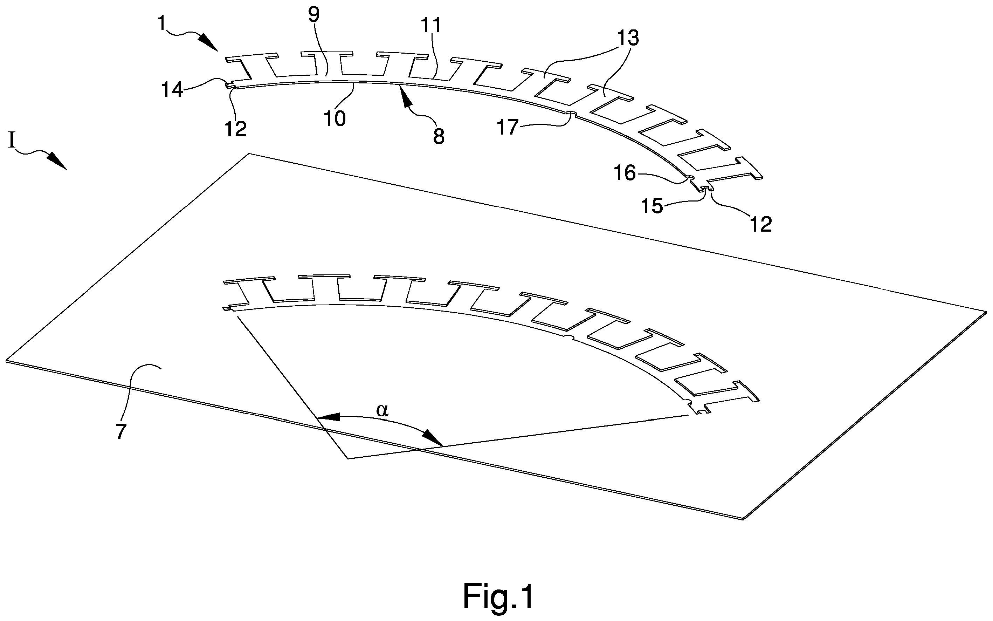

Figure 1 is an axonometric view that illustrates the phase of supplying the laminations as provided by process according to the invention;
Figures 2 and 3 are axonometric views that illustrate the phase of assembling the laminations with each other as provided by the process according to the invention;

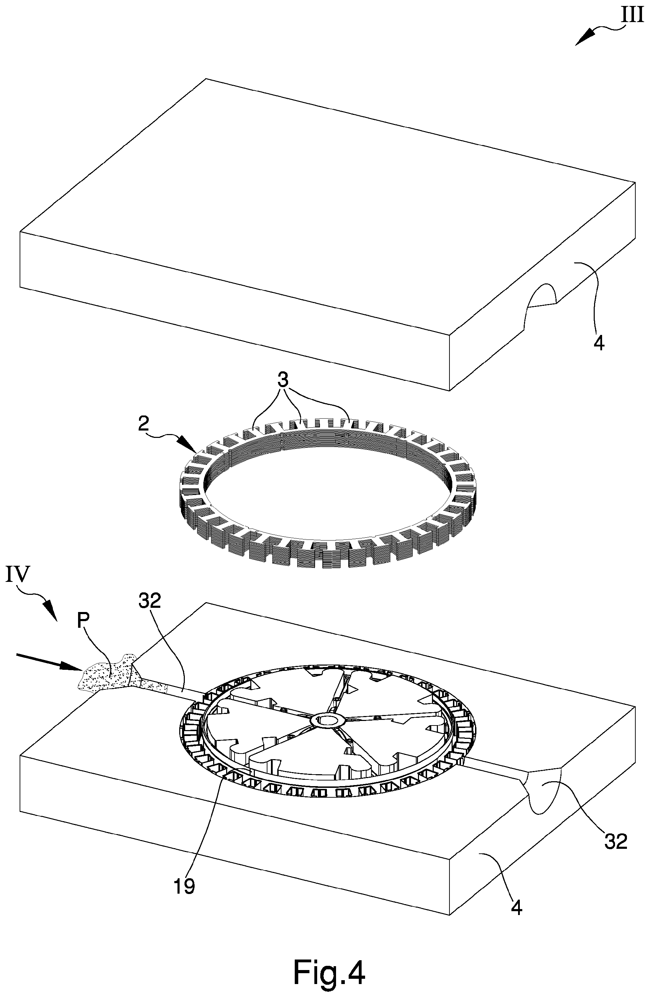

Figure 4 is an axonometric view that illustrates the phases of introducing the ferromagnetic stator body into the mould and of injecting the plastic/polymer material provided by the process according to the invention;

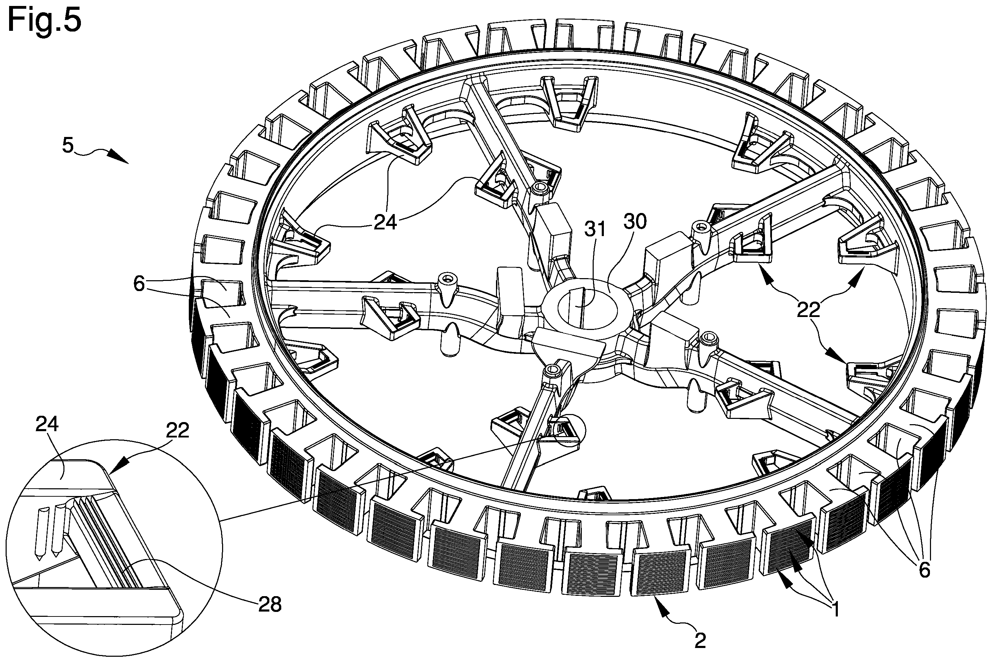

Figure 5 is an axonometric view of the stator support obtained at the exit from the mould provided by the process according to the invention;

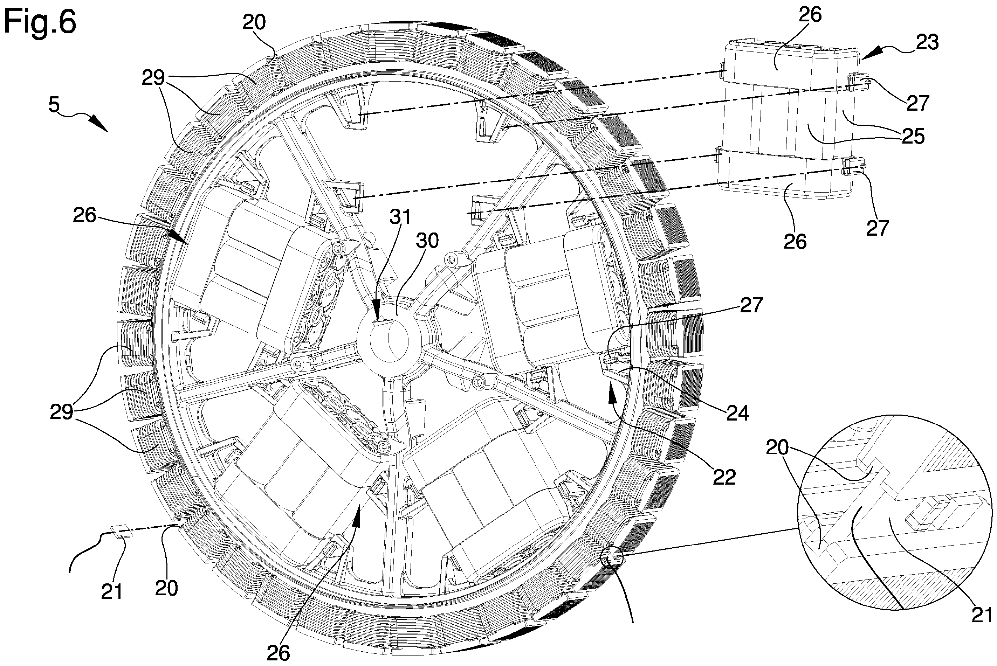

Figure 6 is an axonometric view that illustrates the phase of assembling the electrical windings provided by the process according to the invention;
Figure 7 is an axonometric view of a motorized wheel for bicycles provided with the stator obtained by means of the process according to the invention.

### Embodiments of the Invention

With particular reference to these figures, the phases of the manufacturing process of stators for electric motors and/or generators are indicated with I, II, III, IV, V.

In this respect, it is underlined that the process according to the invention comprises:
- a phase I of providing a plurality of laminations 1 made of ferromagnetic material;
- a phase II of assembling the laminations 1 with one another to form a magnetic stator body 2 of annular conformation provided with a plurality of polar protrusions 3;
- a phase III of introducing the magnetic stator body 2 inside a mould 4 for molding plastic/polymer material P;
- a phase IV of injecting at least one plastic/polymer material P inside the mould to obtain a stator support 5 wherein the ferromagnetic stator body 2 is at least partly embedded, the mould being shaped in such a way that the stator support 5 comprises a plurality of coating walls 6 made of the plastic/polymer material P that cover at least part of the polar protrusions;
- a phase V of mounting a plurality of electrical windings 29 around the coating walls.

The phase I of providing a plurality of laminations 1 comprises the sub-phase of submitting a slab 7 made of the ferromagnetic material (e.g. steel or a steel-silicon alloy) to an operation selected from the list comprising: blanking, photo-engraving and laser cutting.

In actual facts, the starting slab 7 has the same thickness as the individual laminations 1 and is loaded on a shear or a machine for photo-engraving or laser cutting and shaped so as to define the perimeter of the laminations 1.

In particular, each of the laminations 1 comprises an arched slab-shaped section 8, which extends over an arc of circumference with angular extension α which is a submultiple of 360°.

In the particular embodiment shown in the figures, the angular extension α of the arched slab-shaped sections 8 is equal to 90°; this way four arched slab-shaped sections 8 arranged in sequence are sufficient to make up an entire 360° ring.

It is easy to understand, however, that alternative embodiments are possible wherein the arched slab-shaped sections 8 have a different angular extension α and a different number of arched slab-shaped section 8 are needed to make up an entire 360° ring, e.g. three 120° arched slab-shaped sections 8, five 72° arched slab-shaped section 8, six of 60° arched slab-shaped section 8, etc.

Each arched slab-shaped section 8 is provided with:
- two main faces 9 opposite each other;
- one internal arched side 10. In the context of the present treatise, by internal arched side 10 is meant the circumferential edge of the arched slab-shaped sections 8 facing the centre of curvature of the laminations 1;
- one external arched side 11. In the context of the present treatise, by external arched side 11 is meant the circumferential edge of the arched slab-shaped sections 8 arranged opposite the centre of curvature of the laminations 1;
- two extreme sides 12, which connect the internal arched side 10 and the external arched side 11;
- a plurality of protuberances 13 formed on the external arched side 11 and adapted to define the polar protrusions 3. In other words, when the laminations 1 are assembled during the phase II, the protuberances 13 make up the polar protrusions 3.

In the particular embodiment shown in the figures, each arched slab-shaped section 8 comprises nine protuberances 13 out of phase by 10° to each other, but it is easy to understand that they may also be present in a different number or differently out of phase, depending on the number of polar protrusions 3 that one wants to obtain on the ferromagnetic stator body 2.

Conveniently, the arched slab-shaped sections 8 also comprise mutual interlocking coupling means 14, 15 formed at the extreme sides 12.

In the embodiment shown in the figures, the mutual interlocking coupling means 14, 15 consist of a dovetail protrusion 14 formed on one extreme side 12 and of a corresponding dovetail recess 15 formed on the other extreme side 12.

By juxtaposing the extreme sides 12 of two different laminations 1, the dovetail protrusion 14 of one arched slab-shaped section 8 is coupleable by interlocking with the dovetail recess 15 of the other arched slab-shaped section 8.

Advantageously, the arched slab-shaped sections 8 also comprise at least one alignment and centering portion 16, 17 which is formed on the internal arched side 10 and is adapted to define at least one alignment and centering edge 18 on the ferromagnetic stator body 2.

In the embodiment shown in the figures, each arched slab-shaped section 8 comprises two alignment and centering portions 16, 17, of which a first alignment and centering portion 16 and a second alignment and centering portion 17 out of phase by 30° to each other and defined by corresponding circular recesses formed on the internal arched side 10; it is easy to understand, however, that the alignment and centering portions 16, 17 may also be present in different numbers or may be differently out of phase or differently shaped, depending on the use and function of the alignment and centering portions 16, 17 and of the alignment and centering edge 18 which will be described in more detail later on in the present treatise.

It should be noted that all the arched slab-shaped sections 8 are identical to each other and can be modularly assembled.

It should also be noted that the special solution of providing laminations 1 extending over an arc of circumference equal to the angular extension α makes it possible to produce a plurality of laminations 1 starting from the same slab 7, significantly reducing processing debris and the costs for blanking, photo-engraving or laser cutting operations.

The phase II comprises joining the arched slab-shaped sections 8 by interlocking at the mutual interlocking coupling means 14, 15 of the arched slab-shaped sections 8 juxtaposed to each other at the extreme sides 12.

In the particular embodiment shown in the figures, wherein the arched slab-shaped sections 8 have an angular extension α equal to 90°, a group of four laminations 1 interlocked with each other allows making up an internal 360° ring.

The phase II of assembling the laminations 1 also comprises gluing the arched slab-shaped sections 8 by interposing a layer of electrically insulating adhesive material A between the main faces 9 of the arched slab-shaped sections 8 facing each other.

During the assembly phase, the alignment and centering portions 16, 17 operate as a reference point for the assembly.

It is in fact advantageous to glue the laminations 1 together so that at least some of them are out of phase with respect to the adjacent ones and overlap two laminations 1 and not just one of them; this ensures greater strength and solidity to the ferromagnetic stator body 2.

In this regard it should be noted that, in the particular embodiment shown in the figures, each group of four laminations 1 making up an entire 360° ring has four first alignment and centering portions 16 and four second alignment and centering portions 17.

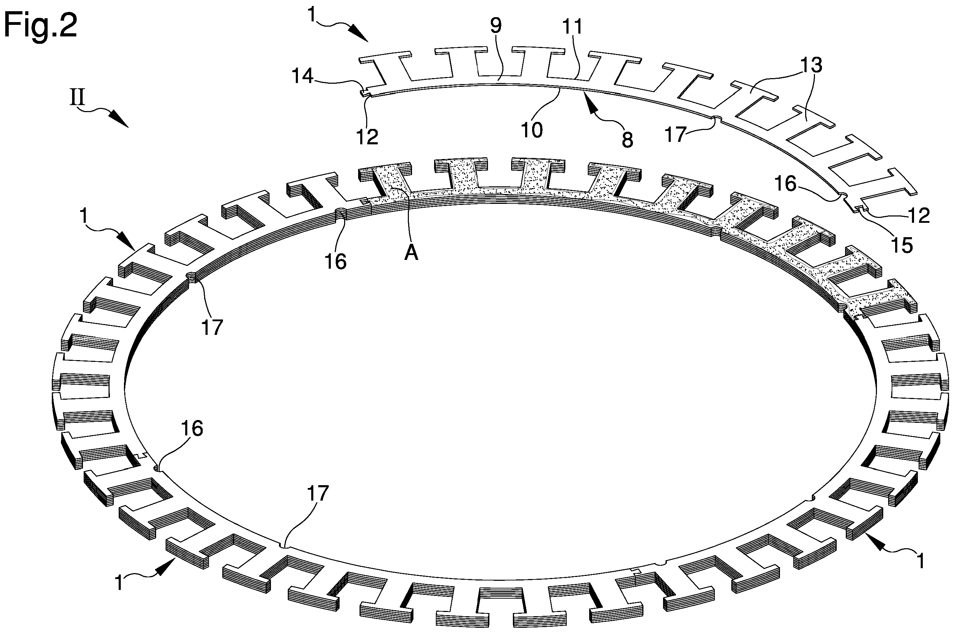

When all the first alignment and centering portions 16 of a group of laminations 1 align to all the first alignment and centering portions 16 of an adjacent group of laminations 1 (Figure 2), the main faces 9 of all laminations 1 match each other and each lamination 1 is glued onto only one adjacent lamination 1.

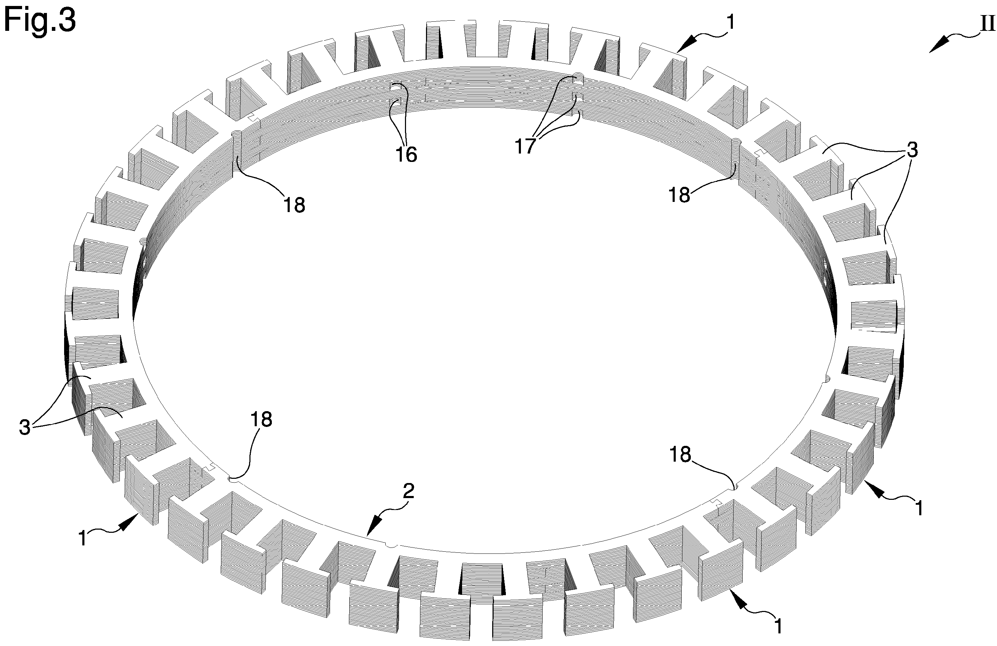

When, on the other hand, the first alignment and centering portions 16 of a group of laminations 1 are aligned to the second alignment and centering portions 17 of the adjacent group of laminations 1 (shifting one group with respect to the other by an angle equal to 30° as shown in Figure 3), then the main faces 9 of the laminations 1 of a group overlap the main faces 9 of two laminations 1 of the adjacent group, thus allowing blocking and stabilizing the respective mutual interlocking coupling means 14, 15.

Advantageously, the phase of gluing the arched slab-shaped sections 8 is carried out by keeping in common alignment at least one of the alignment and centering portions 16, 17 for all the groups of laminations 1, so that the ferromagnetic stator body 2 resulting from the assembly of the laminations 1 has, along the whole thickness thereof, at least one slot that is defined by the alignment and centering portions 16, 17 in common alignment and that makes up the aforementioned alignment and centering edge 18.

In the particular embodiment shown in the figures, wherein the arched slab-shaped sections 8 have an angular extension α equal to 90° and are provided with two alignment and centering portions 16, 17, then the ferromagnetic stator body 2 has four alignment and centering edges 18; it is easy to understand, however, that alternative embodiments are possible wherein the ferromagnetic stator body 2 is provided with a different number of alignment and centering edges 18 according to the conformation of the arched slab-shaped sections 8.

The presence of at least one alignment and centering edge 18 on the ferromagnetic stator body 2 is usefully exploited during the phase III wherein the ferromagnetic stator body 2 is introduced into the mould 4.

The mould 4, in fact, advantageously comprises at least a counter-mould 19 coupleable to the alignment and centering edge 18 by shape coupling, to allow the positioning of the ferromagnetic stator body 2 inside the mould 4 in a pre-established position.

The correct centering between the ferromagnetic stator body 2 and the mould 4 allows the stator support 5 to be molded according to the design.

The stator support 5 is in fact co-molded together with the ferromagnetic stator body 2 when, in phase IV, the plastic/polymer material P is injected into the mould 4; the plastic/polymer material P, which is melted and fluid, thus fills all the spaces inside the mould 4 that are not occupied by the ferromagnetic stator body 2, incorporating it inside.

Preferably the plastic/polymer material P is reinforced plastics with a fibershaped material, e.g. glass fibers, which gives the stator support 5 high strength and sturdiness.

For the introduction of plastic/polymer material P, the mould 4 is provided with one or more injection channels 32.

The mould 4 is also usefully shaped in such a way that the stator support 5 comprises at least one housing seat 20 for a magnetic sensor 21 (e.g. a Hall effect sensor).

Preferably there are three housing seats 20 adapted to house three corresponding magnetic sensors 21 intended to detect the position of a rotor rotating around the stator support 5.

The housing seats 20 are conveniently located in pre-established positions and the mounting of the magnetic sensors 21 on the stator support 5 can be carried out very easily by interlocking the magnetic sensors 21 into the housing seats 20 or gluing them at the inside.

The mould 4 is also shaped so that the stator support 5 comprises at least one fastening seat 22 for at least one battery pack 23.

In the particular embodiment shown in the figures, the stator support 5 comprises a plurality of fastening seats 22, e.g. defined by a series of supporting brackets 24 to which a plurality of battery packs 23 are attached.

Each battery pack 23 consists, e.g., of a set of batteries 25 held by a packing structure 26 provided with fastening teeth 27 that can be attached to the fastening seats 22.

To increase the grip of the battery packs 23, the supporting brackets 24 have notched or knurled surfaces 28.

Conveniently, the insertion of the magnetic sensors 21 into the housing seats 20 and/or the mounting of the battery packs 23 on the stator support 5 can take place after the phase V of mounting the electrical windings 29 around the coating walls 6 or at the same time.

The electrical windings 29, e.g., consist of coils of aluminum wires that can be easily arranged around the coating walls 6, so as to wind the polar protrusions 3, without any danger of direct contact between the electrical windings 29 and the polar protrusions 3.

It should be noted that the electrical insulation of the polar protrusions 3 with respect to the electrical windings 29 is extremely practical, easy and cheap to achieve by means of the process according to the invention because the coating walls 6, which are made of an electrically insulating material such as plastics, are formed simultaneously with the molding of the stator support 5.

The stator support 5 obtained by means of the present process can be used as a stator for different types of applications.

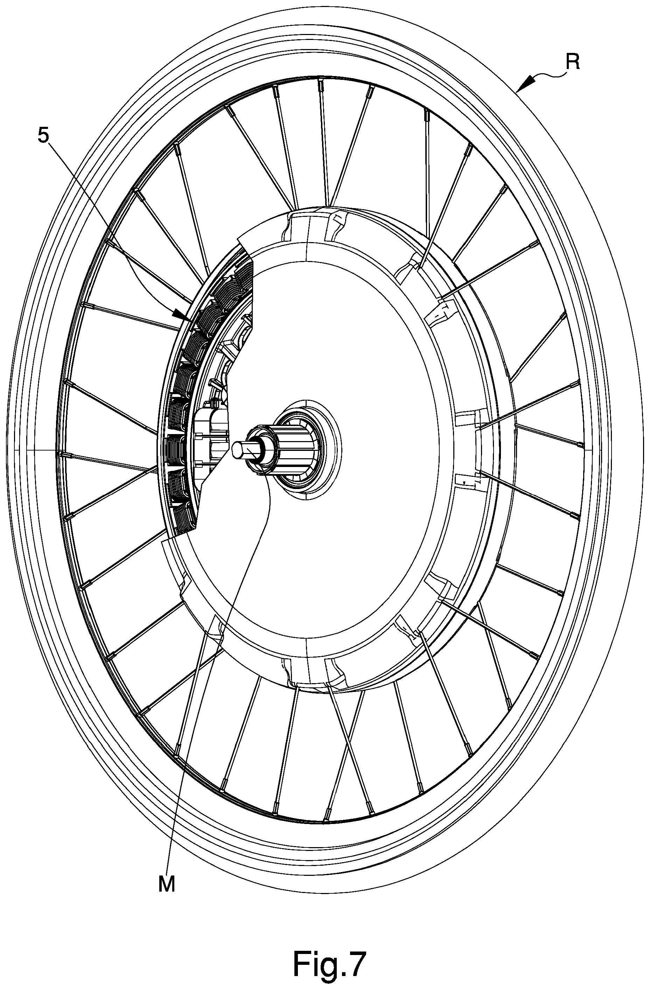

By way of example, Figure 7 shows a possible use inside a motorized wheel R for bicycles.

For this purpose, the mould 4 is conveniently shaped in such a way that the stator support 5 comprises at least one central coupling seat 30 which allows the stator support 5 to be mounted on the hub M of the motorized wheel R.

The central coupling seat 30 is shaped with a keyway 31 which allows it to be rigidly mounted on the hub M of the motorized wheel R, thus preventing it from rotating while the motorized wheel R is turning.

## Claims

1. Manufacturing process of stators for electric motors and/or generators, comprising the phases of:
- providing (I) a plurality of laminations (1) made of ferromagnetic material;
- assembling (II) said laminations (1) with one another to form a ferromagnetic stator body (2) of annular conformation provided with a plurality of polar protrusions (3);
- introducing (III) said ferromagnetic stator body (2) inside a mould (4) for plastic/polymer material molding;
- injecting (IV) at least one plastic/polymer material (P) inside said mould (4) to obtain a stator support (5) wherein said ferromagnetic stator body (2) is at least partly embedded, said mould (4) being shaped in such a way that said stator support (5) comprises a plurality of coating walls (6) in said plastic/polymer material (P) that cover at least part of said polar protrusions (3);
- mounting (V) a plurality of electrical windings (29) around said coating walls (6)
**characterized by** the fact that said mould (4) is shaped in such a way that said stator support (5) comprises at least one fastening seat (22) of at least one battery pack (23) and at least one central coupling seat (30) to a bicycle hub, so that a motorized bicycle wheel (R) is obtained.

2. Process according to claim 1, **characterized by** the fact that said providing (I) a plurality of laminations (1) comprises the sub-phase of submitting a slab (7) made of said ferromagnetic material to an operation selected from the list comprising: blanking, photo-engraving and laser cutting.

3. Process according to one or more of the preceding claims, **characterized by** the fact that each of said laminations (1) comprises an arched slab-shaped section (8), which extends over an arc of circumference and is provided with:
- main faces (9);
- an internal arched side (10);
- an external arched side (11);
- two extreme sides (12);
- a plurality of protuberances (13) formed on said external arched side (11) adapted to define said polar protrusions (3).

4. Process according to one or more of the preceding claims, **characterized by** the fact that said assembling (II) comprises gluing said arched slab-shaped section (8) by interposing a layer of electrically insulating adhesive material (A) between said main faces (9).

5. Process according to one or more of the preceding claims, **characterized by** the fact that said arched slab-shaped sections (8) comprise mutual interlocking coupling means (14, 15) formed at said extreme sides (12), said assembling (II) comprising joining said arched slab-shaped sections (8) by interlocking at said mutual interlocking coupling means (14, 15).

6. Process according to one or more of the preceding claims, **characterized by** the fact that said arched slab-shaped sections (8) comprise at least one alignment and centering portion (16, 17) formed on said internal arched side (10) adapted to define at least one alignment and centering edge (18) on said ferromagnetic stator body (2), said mould (4) comprising at least one counter-mould (19) coupleable to said alignment and centering edge (18) by shape coupling, to allow the positioning of said ferromagnetic stator body (2) inside said mould (4) in a pre-established position.

7. Process according to one or more of the preceding claims, **characterized by** the fact that said mould (4) is shaped in such a way that said stator support (5) comprises at least one housing seat (20) of a magnetic sensor (21).

8. Process according to one or more of the preceding claims, **characterized by** the fact that said plastic/polymer material (P) is reinforced plastic with a fibershaped material.

## Patentansprüche

1. Verfahren zur Herstellung von Statoren für Elektromotoren und/oder Generatoren, das die folgenden Phasen umfasst:
- Bereitstellen (I) einer Mehrzahl von Blechen (1) aus ferromagnetischem Material;
- Zusammenfügen (II) der Bleche (1) miteinander, um einen ferromagnetischen Stator-Körper (2) von ringförmiger Gestalt zu bilden, der mit einer Mehrzahl von polaren Vorsprüngen (3) bereitgestellt wird;
- Einführen (III) des ferromagnetischen Stator-Körpers (2) in eine Form (4) zum Formen von Kunststoff/Polymer-Material;
- Einspritzen (IV) mindestens eines Kunststoff-/Polymermaterials (P) in die Form (4), um einen Stator-Träger (5) zu erhalten, in den der ferromagnetische Stator-Körper (2) zumindest teilweise eingebettet ist, wobei die Form (4) so geformt ist, dass der Stator-Träger (5) eine Mehrzahl von Beschichtungswänden (6) in dem Kunststoff-/Polymermaterial (P) umfasst, die zumindest einen Teil der polaren Vorsprünge (3) bedecken;
- Anbringen (V) einer Mehrzahl von elektrischen Wicklungen (29) um die Beschichtungswände (6)
**dadurch gekennzeichnet, dass** die Form (4) so geformt ist, dass der Stator-Träger (5) mindestens einen Befestigungssitz (22) für mindestens ein Batteriepaket (23) und mindestens einen zentralen Kupplungssitz (30) für eine Fahrradnabe aufweist, so dass ein motorisiertes Rad eines Fahrrads (R) erhalten wird.

2. Verfahren nach Anspruch 1, **dadurch gekennzeichnet, dass** das Bereitstellen (I) einer Mehrzahl von Blechen (1) die Unterphase umfasst, in der eine aus dem ferromagnetischen Material hergestellte Platte (7) einer Operation unterzogen wird, die aus der Liste ausgewählt ist, die umfasst: Stanzen, Fotogravieren und Laserschneiden.

3. Verfahren nach einem oder mehreren der vorhergehenden Ansprüche, **dadurch gekennzeichnet, dass** jedes der Bleche (1) einen bogenförmigen plattenförmigen Abschnitt (8) aufweist, der sich über einen Umfangsbogen erstreckt und versehen ist mit:
- Hauptflächen (9);
- einer inneren bogenförmigen Seite (10);
- einer äußeren bogenförmigen Seite (11);
- zwei äußersten Seiten (12);
- einer Mehrzahl von Vorsprüngen (13), die auf der äußeren bogenförmigen Seite (11) geformt sind und dazu ausgebildet sind, die polaren Vorsprünge (3) zu definieren.

4. Verfahren nach einem oder mehreren der vorhergehenden Ansprüche, **dadurch gekennzeichnet, dass** das Zusammenfügen (II) das Verkleben des bogenförmigen plattenförmigen Abschnitts (8) durch Einfügen einer Schicht aus elektrisch isolierendem Klebematerial (A) zwischen den Hauptflächen (9) umfasst.

5. Verfahren nach einem oder mehreren der vorangehenden Ansprüche, **dadurch gekennzeichnet, dass** die bogenförmigen plattenförmigen Abschnitte (8) an den äußersten Seiten (12) ausgebildete, gegenseitig verriegelnde Verbindungsmittel (14, 15) aufweisen, wobei das Zusammenfügen (II) das Verbinden der bogenförmigen plattenförmigen Abschnitte (8) durch Verriegeln an den gegenseitig verriegelnden Verbindungsmitteln (14, 15) umfasst.

6. Verfahren nach einem oder mehreren der vorhergehenden Ansprüche, **dadurch gekennzeichnet, dass** die bogenförmigen plattenförmigen Abschnitte (8) mindestens einen Ausrichtungs- und Zentrierabschnitt (16, 17) umfassen, der auf der inneren bogenförmigen Seite (10) ausgebildet ist und dazu ausgebildet ist, mindestens eine Ausrichtungs- und Zentrierkante (18) an dem ferromagnetischen Stator-Körper (2) zu definieren, wobei die Form (4) mindestens eine Gegenform (19) aufweist, die mit der Ausrichtungs- und Zentrierkante (18) durch Formschluss koppelbar ist, um die Positionierung des ferromagnetischen Stator-Körpers (2) innerhalb der Form (4) in einer vorher festgelegten Position zu ermöglichen.

7. Verfahren nach einem oder mehreren der vorhergehenden Ansprüche, **dadurch gekennzeichnet, dass** die Form (4) so gestaltet ist, dass der Stator-Träger (5) mindestens einen Gehäusesitz (20) für einen magnetischen Sensor (21) aufweist.

8. Verfahren nach einem oder mehreren der vorhergehenden Ansprüche, **dadurch gekennzeichnet, dass** das Kunststoff-/Polymermaterial (P) ein mit einem faserförmigen Material verstärkter Kunststoff ist.

## Revendications

1. - Procédé de fabrication de stators pour moteurs et/ou générateurs électriques, comprenant les phases consistant à :
- fournir (I) une pluralité de tôles (1) réalisées en matériau ferromagnétique ;
- assembler (II) lesdites tôles (1) entre elles pour former un corps de stator ferromagnétique (2) de conformation annulaire comportant une pluralité de saillies polaires (3) ;
- introduire (III) ledit corps de stator ferromagnétique (2) à l'intérieur d'un moule (4) pour un moulage de matériau plastique/polymère ;
- injecter (IV) au moins un matériau plastique/polymère (P) à l'intérieur dudit moule (4) pour obtenir un support de stator (5), ledit corps de stator ferromagnétique (2) étant au moins partiellement incorporé, ledit moule (4) étant façonné de telle sorte que ledit support de stator (5) comprend une pluralité de parois de revêtement (6) dans ledit matériau plastique/polymère (P) qui recouvrent au moins une partie desdites saillies polaires (3) ;
- monter (V) une pluralité d'enroulements électriques (29) autour desdites parois de revêtement (6),
**caractérisé par le fait que** ledit moule (4) est conformé d'une manière telle que ledit support de stator (5) comprend au moins un siège de fixation (22) d'au moins un bloc-batterie (23) et au moins un siège de couplage central (30) à un moyeu de bicyclette, de telle sorte qu'une roue de bicyclette motorisée (R) soit obtenue.

2. - Procédé selon la revendication 1, **caractérisé par le fait que** ladite fourniture (I) d'une pluralité de tôles (1) comprend la sous-phase consistant à soumettre une plaque (7) faite dudit matériau ferromagnétique à une opération choisie dans la liste comprenant : le découpage, la photogravure et la découpe laser.

3. - Procédé selon une ou plusieurs des revendications précédentes, **caractérisé par le fait que** chacune desdites tôles (1) comprend une section arquée (8) en forme de plaque, qui s'étend sur un arc de circonférence et qui comporte :
- des faces principales (9) ;
- un côté arqué interne (10) ;
- un côté arqué externe (11) ;
- deux côtés extrêmes (12) ;
- une pluralité de saillies (13) formées sur ledit côté arqué externe (11) aptes à définir lesdites saillies polaires (3).

4. - Procédé selon une ou plusieurs des revendications précédentes, **caractérisé par le fait que** ledit assemblage (II) comprend le collage de ladite section arquée en forme de plaque (8) par interposition d'une couche de matériau adhésif électriquement isolant (A) entre lesdites faces principales (9).

5. - Procédé selon une ou plusieurs des revendications précédentes, **caractérisé par le fait que** lesdites sections arquées en forme de plaques (8) comprennent des moyens de couplage à verrouillage mutuel (14, 15) formés auxdits côtés extrêmes (12), ledit assemblage (II) comprenant la jonction desdites sections arquées en forme de plaques (8) par verrouillage auxdits moyens de couplage à verrouillage mutuel (14, 15).

6. - Procédé selon une ou plusieurs des revendications précédentes, **caractérisé par le fait que** lesdites sections arquées en forme de plaques (8) comprennent au moins une portion d'alignement et de centrage (16, 17) formée sur ledit côté arqué interne (10) apte à définir au moins un bord d'alignement et de centrage (18) sur ledit corps de stator ferromagnétique (2), ledit moule (4) comprenant au moins un contre-moule (19) apte à être couplé audit bord d'alignement et de centrage (18) par couplage de forme, pour permettre le positionnement dudit corps de stator ferromagnétique (2) à l'intérieur dudit moule (4) dans une position préétablie.

7. - Procédé selon une ou plusieurs des revendications précédentes, **caractérisé par le fait que** ledit moule (4) est conformé d'une manière telle que ledit support de stator (5) comporte au moins un siège de logement (20) d'un capteur magnétique (21).

8. - Procédé selon une ou plusieurs des revendications précédentes, **caractérisé par le fait que** ledit matériau plastique/polymère (P) est un plastique renforcé par un matériau en forme de fibre.
